Europäisches Patentamt

European Patent Office

Office européen des brevets

(11) Veröffentlichungsnummer: **0 035 729**
**A2**

(12) **EUROPÄISCHE PATENTANMELDUNG**

(21) Anmeldenummer: 81101487.7

(22) Anmeldetag: 02.03.81

(51) Int. Cl.³: **C 08 F 2/06**
**C 08 L 57/00**

(30) Priorität: 10.03.80 DE 3009159

(43) Veröffentlichungstag der Anmeldung:
16.09.81 Patentblatt 81/37

(84) Benannte Vertragsstaaten:
AT BE CH DE FR GB IT LI LU NL SE

(71) Anmelder: Henkel Kommanditgesellschaft auf Aktien
-Patentabteilung- Postfach 1100 Henkelstrasse 67
D-4000 Düsseldorf 1(DE)

(72) Erfinder: Eschwey, Helmut, Dr.
Landrat-Ackermann-Strasse 28
D-6120 Michelstadt/Odenwald(DE)

(72) Erfinder: Worschech, Kurt, Dr.
Alte Strasse 4
D-2854 Loxstedt(DE)

(72) Erfinder: Wegemund, Bernd, Dr.
Händelweg 3
D-5657 Haan(DE)

(54) Verfahren zur radikalischen Polymerisation und danach hergestellte Kunststoffadditive.

(57) Verfahren zur radikalischen Polymerisation von Acrylund Methacrylsäure, deren Estern und Amiden, Acrylnitril und Styrol, unter Verwendung eines flüssigen Mediums, das eine Schmelze von bei Raumtemperatur festen organischen Verbindungen, vorzugsweise gesättigten oder ungesättigten, geradkettigen oder verzweigten Fettsäuren mit bis zu 30 (8 bis 26) C-Atomen beziehungsweise deren Derivaten (Ester, Amide, Fettalkohole) mit Tropfpunkten zwischen 25 und 120 (40 bis 110)° C ist. Das Gewichtsverhältnis von Monomeren zu den festen organischen Verbindungen soll 10 bis 90 : 90 bis 10 (25 bis 75 : 75 bis 25) betragen.

Das Verfahren erlaubt die direkte Herstellung von Kunststoffadditiven für die Kunststoffverarbeitung, speziell für die Verarbeitung von elastomeren, thermoplastischen Polymerisaten und Duroplasten, insbesondere durch Warmverformung dar.

Croydon Printing Company Ltd

Patentanmeldung
D 6132 EP

"Verfahren zur radikalischen Polymerisation und danach
hergestellte Kunststoffadditive"

Die vorliegende Erfindung betrifft ein Verfahren zur radikalischen Polymerisation ungesättigter Monomerer unter Verwendung von inerten Verdünnungsmitteln als Reaktionsmedium. Das neue Verfahren gestattet die Herstellung polymerhaltiger Massen, die für viele Einsatzzwecke ohne Abtrennung des Polymerisationsmediums weiterverarbeitet werden können. Insbesondere bezieht sich die Erfindung auf ein Verfahren zur radikalischen Polymerisation von Acryl- und Methacrylsäuren, deren Derivate sowie Styrol. Die nach dem erfindungsgemäßen Verfahren gewonnenen polymerhaltigen Massen stellen hochwirksame Additivsysteme für die Kunststoffverarbeitung, speziell für die Verarbeitung von Polyvinylchlorid dar.

Bei der Substanzpolymerisation werden die Monomeren ohne Verdünnungsmedium polymerisiert und gehen vom flüssigen über den zähviskosen in den festen Zustand über. Die bei allen Polymerisationen notwendige Abführung der Reaktionswärme stellt hier, speziell bei sehr reaktiven Monomeren wie Methylacrylat, Acrylsäure oder Tetrafluorethylen ein schwierig zu lösendes Problem dar. Außerdem lassen sich die erhaltenen Polymeren wegen ihrer hohen Viskosität nur schlecht aus dem Reaktionsgefäß entfernen und weiterverarbeiten.

/2

Bei der Lösungspolymerisation ist das Monomere im verwendeten Lösungsmittel gelöst, das gebildete Polymere kann löslich oder auch unlöslich sein. Als Lösungsmittel dienen in der Praxis Wasser oder niedermolekulare organische Lösungsmittel wie aliphatische oder aromatische Kohlenwasserstoffe, Ester, Ether, Alkohole oder Ketone. Die Viskosität der Reaktionsmasse ist bei der Lösungspolymerisation viel niedriger als im Fall der Substanzpolymerisation, erfordert allerdings in erheblichem Maß zusätzliche Kosten nicht nur für Einrichtungen zur Entfernung des Lösungsmittels vom Polymeren, sondern auch für die Wiedergewinnung und Reinigung der Lösungsmittel. Polymere werden nach diesem Verfahren meistens nur dann hergestellt, wenn die Lösungen als solche, beispielsweise für Lacke oder Klebstoffe verwendet werden, das Polymere somit im flüssigen, das heißt im gelösten Zustand zum Einsatz gelangt.

Aufgabe der vorliegenden Erfindung war es, flüssige Polymerisationsmedien zu finden, die bei üblichen Polymerisationstemperaturen flüssig sind, die jedoch bei Raumtemperatur beziehungsweise bei der Temperatur der Weiterverarbeitung pulverförmige oder wachsartige Feststoffe darstellen und so eine Weiterverarbeitung des Polymeren als feste Masse unter Vermeidung einer Trennoperation vom üblichen flüssigen Polymerisationsmedium gestatten. Eine weitere spezielle Aufgabe der vorliegenden Erfindung war es, solche Polymerisationsmedien zu finden, die sich für die Synthese von polymeren Hilfsmitteln für die Kunststoffverarbeitung wie eines flow promoters oder Trennmittels oder anderen Kunststoffadditiven auf Acryl- und Methacrylester- und Styrolbasis zu finden, wobei das bei Raumtemperatur feste Polymerisationsmedium ein Inertmaterial ohne negative Einflüsse oder sogar eine zweite Wirkkomponente für den weiteren Prozeß der Kunststoffverarbeitung darstellt.

/3

Erfindungsgemäß wird diese Aufgabe gelöst durch ein Verfahren zur radikalischen Polymerisation ungesättigter Monomerer unter Verwendung inerter Verdünnungsmittel, welches dadurch gekennzeichnet ist, daß die Polymerisation in der Schmelze von bei Raumtemperatur festen organischen Verbindungen durchgeführt wird. Vorzugsweise wird die Polymerisation in bei Raumtemperatur festen Fettsäuren beziehungsweise deren Derivaten mit Tropfpunkten zwischen 25 und 120° C, insbesondere zwischen 40 und 110° C vorgenommen (vgl."Fette, Seifen, Anstrichmittel" (1954) S. 1028). Die für die Polymerisation geeigneten bei Raumtemperatur festen Fettsäuren sollen insbesondere bis zu 30 C-Atome im Molekül haben. Dies gilt auch für deren Derivate wie Ester, Amide und/oder Fettalkohole.

Eine besonders bevorzugte Gruppe sind gesättigte oder ungesättigte, geradkettige oder verzweigte Fettsäuren mit 8 bis 26 Kohlenstoffatomen im Molekül und/oder die sich davon ableitenden Ester und/oder Partialester mit mono- bis hexafunktionellen aliphatischen beziehungsweise cycloaliphatischen Alkoholen und/oder Fettsäureamide, wobei der Stickstoff auch mit 1 bis 2 Alkylresten mit bis zu insgesamt 16 Kohlenstoffatomen substituiert sein kann. Gegebenenfalls können die Alkylreste auch mit dem Stickstoff als Bestandteil einen Ring bilden.

Die für das Verfahren geeigneten Fettsäuren sollen - wie vorher ausgeführt - bis zu 30 C-Atome aufweisen, vorzugsweise aber 8 bis 26 Kohlenstoffatome im Molekül enthalten. Darüber hinaus können sie Doppelbindungen enthalten und geradkettig und verzweigt sein. Es ist auch möglich, daß diese Fettsäuren mit 1 oder 2 Hydroxylgruppen oder einigen Chloratomen substituiert sind. Jedoch soll die Anzahl der Chloratome die Zahl 6 nicht übersteigen. Die geeigneten Fettsäuren können aus natürlichem Material gewonnen sein oder auch in bekannter Wei-

0035729

HENKEL KGaA
ZR-FE/Patente

se synthetisch hergestellt. Ferner sind geeignet die
sogenannten Montansäuren, die etwas längere Ketten bis
zu 30 Kohlenstoffatomen aufweisen. Neben den Fettsäuren
selbst sind geeignet die Ester oder auch Partialester
von mono- bis hexafunktionellen aliphatischen beziehungsweise cycloaliphatischen Alkoholen. Als Alkohole kommen
in Betracht die Monoalkohole bis zu 18 Kohlenstoffatomen,
insbesondere aber Methanol, Ethanol, Propanol und Butanol. Unter den mehrfunktionellen Alkoholen seien genannt:
das Ethandiol, Glycerin, Trimethylolpropan, Pentaerythrit,
Sorbit oder Mannit. Sofern es sich um Derivate der Fettsäuren  mit mehrfunktionellen Alkoholen handelt, können
die Hydroxylgruppen nur teilweise verestert sein. Geeignete cycloaliphatische Alkohole sind beispielsweise das
Cyclohexanol beziehungsweise das 1,4-Cyclohexandiol.

Die für das erfindungsgemäße Verfahren geeigneten Amide
leiten sich von den vorher charakterisierten Fettsäuren
ab. Dabei kann der Stickstoff mit 1 bis 2 Alkylresten
substituiert sein. Als Substituenten am Stickstoff kommen
in Frage Methyl-, Ethyl-, Propyl-, Butyl- und Octylreste. Falls die Alkylreste zu einem Ring geschlossen
sind, ist der 5er und 6er Ring bevorzugt.

Nach einer weiteren bevorzugten Ausführungsform wird
das erfindungsgemäße Polymerisationsverfahren in aliphatischen natürlichen oder synthetischen, gegebenenfalls
Doppelbindung enthaltenen Monoalkoholen mit 8 bis 26,
insbesondere 8 bis 18 Kohlenstoffatomen im Molekül vorgenommen. Geeignet sind auch deren Ester mit Mono- und Dicarbonsäuren. Die erwähnten Monoalkohole können 1 bis 2
Doppelbindungen aufweisen und sind durch Reduktion der
entsprechenden Fettsäurealkylester, insbesondere Fettsäuremethylester leicht erhältlich. Als Veresterungskomponente kommen neben kurzkettigen Monocarbonsäuren wie
Essigsäure oder Propionsäure in Frage Dicarbonsäuren wie Adipinsäure, Sebacinsäure oder Terephthalsäure.

Sofern die Randbedingungen gemäß des Tropfpunktes eingehalten werden, sind zahlreiche Derivate von Fettsäuren wie auch Fettsäure selbst geeignet. Eine Übersicht über derartige Verbindungen findet sich in der Zeitschrift "Kunststoffe, Plastics" 3 (1975), S. 17 ff. sowie in der Zeitschrift "Kunststoffe" 66 (1976), S. 697 ff.

Als Monomere für das erfindungsgemäße Verfahren sind geeignet solche ethylenisch ungesättigten Typen wie etwa Acrylsäure, Methacrylsäure sowie deren Ester, Acrylnitril, (Meth)acrylamid oder Styrol. Im einzelnen seien hier genannt: Acrylsäure, Acrylsäuremethylester, Acrylsäureethylester, Acrylsäurebutylester, Acrylsäure-2-ethylhexylester, Methacrylsäureethylester, Methacrylsäurebutylester oder auch die Ester von Butandiol, Ethylenglykol oder Tetrahydrofurylalkohol mit Acrylsäure beziehungsweise Methacrylsäure. Weiterhin eignet sich das Acrylnitril selbst und das Acrylamid, welches auch am Stickstoff substituiert sein kann, wie beispielsweise das Methylylacrylamid oder das Isopropylacrylamid beziehungsweise das tert.-Butylacrylamid. Weiterhin sind geeignete Monomere wie $\alpha$-Methylstyrol, p-Chlorstyrol oder Ethylstyrol, Divinylbenzol sowie auch Isopren und Dicyclopentadien.

Bevorzugt sind solche Monomere beziehungsweise Monomergemische, deren Polymeren beziehungsweise Copolymeren wirksame Additive für die Kunststoffverarbeitung, speziell für die thermoplastische Verarbeitung von Polyvinylchlorid sind. Es handelt sich hierbei um Methacrylsäuremethylester, Gemische aus Methacrylsäuremethylester und

/6

Acrylsäurebutylester sowie Acrylsäureethylester, ferner
um Gemische aus Methacrylsäuremethylester, Acrylsäurebeziehungsweise Methacrylsäurebutylester und Styrol.
Beispielsweise ist für die Herstellung eines sogenannten
flow promoters ein Copolymerisat aus Methacrylsäuremethylester und Acrylsäureethylester geeignet.
Ein Polymerisat aus Acrylsäurebutylester eignet sich auch
als Trennmittel bei der Verarbeitung von Polyvinylchlorid,
wenn bestimmte bekannte Mengenverhältnisse eingehalten
werden.

Die nach dem erfindungsgemäßen Verfahren eingesetzten
inerten Verdünnungsmittel besitzen bei den Polymerisationstemperaturen relativ niedrige bis höchstens mittlere
Viskosität. Sie sind also leicht rührbare Flüssigkeiten.
Daher erfolgt die Abfuhr der Polymerisationswärme relativ leicht und auch größere Ansätze lassen sich gut beherrschen. Das Gewichtsverhältnis von Monomeren zu den
bei Raumtemperaturen festen inerten Verdünnungsmitteln
soll zwischen 10 : 90 und 90 : 10, insbesondere 25 :75
und 75 : 25 liegen. Praktisch wird es bestimmt durch
die angestrebte Eigenschaft des die polymerhaltige Masse
enthaltenden Endproduktes.

Als Initiatoren für die Polymerisation eignen sich die
bekannten üblichen Radikalbildner wie Peroxide, zum Beispiel Diacetylperoxid, Benzoylperoxid oder auch Hydroperoxide wie Cumolhydroperoxid. Bevorzugt sind jedoch
Azoverbindungen wie das Azoisobuttersäurenitril. Die
Polymerisation wird so durchgeführt, daß zweckmäßig die
festen inerten Verdünnungsmittel vorgelegt und geschmolzen werden. Dazu setzt man dann bei der gewünschten
Reaktionstemperatur das Monomere zu. Zweckmäßig läßt man
den im Monomeren beziehungsweise Monomergemisch verteilten Polymerisationsinitiator langsam zulaufen. Man wählt
eine solche Ausgangstemperatur, daß die Polymerisation
rasch anspringt. Bei chargenweiser Polymerisation ist die Reaktion im allgemeinen nach 2 bis 6 Stunden
beendet.

Natürlich ist es auch möglich, die Polymerisation kontinuierlich durchzuführen, beispielsweise den ersten Teil in ein Reaktionsrohr, in dem man das verflüssigte inerte Verdünnungsmittel gleichzeitig mit dem zu polymerisierenden Monomeren einspeist. Dabei kann der Initiator auf einmal oder an verschiedenen Stellen zugefügt werden. Nach Durchführung des ersten Reaktionsschrittes ist dann eine Nachreaktion in einem Sammelgefäß möglich.

Im Fall von Acryl- und Methacrylsäureestern niedriger Alkohole wie Methacrylsäuremethylester oder Acrylsäureethylester sowie im Fall der Polymerisation von Styrol verlaufen die Polymerisationen als Dispersions- beziehungsweise Fällungspolymerisationen. Die Monomeren sind in der Schmelze der Fettalkohol- und Fettsäurederivate löslich, die Polymeren unlöslich. Je nach Reaktionsführung erhält man mehr oder weniger fein verteilte Polymerniederschläge oder fein verteilte Suspensionen mit Teilchengrößen zwischen 0,1 $\mu$ bis zu 3 mm.

Bei Copolymerisationen von solchen Monomeren, die lösliche als auch unlösliche Polymere bilden, zum Beispiel bei der Copolymerisation von Methacrylsäuremethylester und Methacrylsäurebutylester, durchlaufen die Polymerisationen klebrige Phasen, die zu einer unerwünschten Klumpenbildung führen können. In diesen Fällen hat sich die Mitverwendung von 0,1 bis 15 Gewichtsprozent, bezogen auf Monomeres, eines speziellen Emulgators als vorteilhaft erwiesen, da dieser sowohl die Koagulation wirkungsvoll verhindert als auch die Teilchengröße günstig beeinflußt. Derartige Emulgatoren für nichtwäßrige Systeme, zum Beispiel Polymerisate oder Pfropfpolymerisate

**0035729**

**HENKEL KGaA**
ZR-FE/Patente

des Methylmethacrylats mit Laurylmethacrylat oder Ethylhexylacrylat oder Poly-2-ethylhexylacrylat selbst sowie dessen Copolymere mit weiteren acrylischen und methacrylischen Monomeren. Eine Übersicht über geeignete Emulgatoren gibt zum Beispiel Encyclopedia of Polymer Science and Technology, Interscience Publishers New York, "Non aqueous dispersions".

Die nach dem erfindungsgemäßen Verfahren hergestellten Polymeren liegen in den Molekulargewichtsbereichen von etwa 500 bis 5 000 000, insbesondere zwischen 1 000 und 500 000, wobei das Polymerisationsmedium in der Regel eine schwache Telogenfunktion ausübt. Durch weitere Mitverwendung üblicher Telogene wie zum Beispiel aliphatische Mercaptane lassen sich die Molekulargewichte - wie aus anderen Polymerisationsverfahren bekannt - reduzieren. Die Mitverwendung di- und multifunktioneller Monomerer wie zum Beispiel Divinylbenzol oder Dicyclopentadien erhöht die Molekulargewichte bis zur Ausbildung unlöslicher Gele.

Die resultierenden polymerhaltigen Massen sind je nach Art des enthaltenen Polymeren und der Fettalkohol- und Fettsäurederivate sowie je nach dem enthaltenen Gewichtsverhältnis beider Komponenten wachsartige, feste bis pulverförmige Produkte. Die Aufarbeitung der Schmelzen beziehungsweise erkalteten Schmelzen geschieht vorteilhafterweise durch Sprühkühlung oder durch andere aus der Aufarbeitung wachsartiger Fettsäurederivate bekannter Verfahren. In vielen Fällen kann man die polymerhaltigen Massen bei Raumtemperatur oder gegebenenfalls unter Kühlung zu feinen Pulvern vermahlen.

Die bei dem erfindungsgemäßen Verfahren erhaltenen Reaktionsprodukte stellen wertvolle Kunststoffadditive dar, die zur Verarbeitung thermoplastischer Polymerisate und Duroplaste unter Warmverformung verwendet werden können. Insbesondere sind die erfindungsgemäß erhältlichen Kunststoffadditive zur thermoplastischen Verarbeitung von Polyvinylchlorid beziehungsweise Mischpolymerisaten des Vinylchlorids geeignet. Abgesehen von diesem Hauptanwendungsgebiet lassen sie sich selbstverständlich auch bei der thermoplastischen Verarbeitung von anderen Polymerisaten verwenden, wenn die entsprechenden Voraussetzungen gegeben sind. Diese sind unter bestimmten Umständen gegeben bei der Verarbeitung von Polypropylen, Polyethylen, Mischpolymerisaten des Ethylens mit Vinylacetat, Polymethacrylaten, Mischpolymerisaten des Methylmethacrylats mit anderen Monomeren, Polyurethanen, Polyamiden und insbesondere linearen Polyestern.

**0035729**

## Beispiele

## Herstellung der Polymerisate

In einer 2-1-Planflanschapparatur aus Glas mit Rührer, Thermometer und Tropftrichter wurden die bei Raumtemperatur festen Fettderivate vorgelegt und durch Erwärmen auf 30 bis 120° C verflüssigt. Im Verlauf von 2 bis 6 Stunden tropfte man die Monomeren sowie den Polymerisationsinitiator gleichmäßig zu und läßt noch 30 Minuten zur Vervollständigung des Umsatzes nachreagieren. In einigen Fällen setzt man der Schmelze polymere Emulgatoren beziehungsweise Schutzkolloide zur Erzielung feinteiliger Polymeremulsionen beziehungsweise -suspensionen zu. Die erkaltete polymerhaltige Masse wurde durch Schuppen oder Mahlen zerkleinert.

In der nachfolgenden Tabelle sind angegeben nach der laufenden Nummer des Beispiels das Reaktionsmedium, das Monomere, der Initiator (AIBN = Azoisobuttersäurenitril, DA: = Diacetylperoxid). Als Emulgator wurde stets Poly-2-ethylhexylacrylat verwendet, falls ein solcher sich als notwendig erwies. Es folgen die Polymerisationstemperatur und -Dauer. Es wurden feste homogene Lösungen beziehungsweise feinteilige Dispersionen erhalten.

/11

| Bei-spiel | Medium | Monomeres | Initiator | Emulgator | Temperatur/Zeit | Produkt |
|---|---|---|---|---|---|---|
| 1 | 200 g Stearinsäure-ester v. Fettalkohol ($C_{8-18}$) | 100 g Butyl-methacrylat | 1,66 g AIBN | – | $95^\circ C/2$ h | Lösung |
| 2 | 200 g Stearinsäure-ester v. Fettalkohol ($C_{8-18}$) | 100 g Ethyl-acrylat | 1,66 g AIBN | – | $80^\circ C/4,5$ h | Suspension |
| 3 | 190 g Stearinsäure-ester v. Fettalkohol ($C_{8-18}$) | 95 g Styrol | 1,66 g AIBN | 15 g | $80^\circ C/3,5$ h | Suspension |
| 4 | 300 g Pentaerythrit-mono-distearat (1 : 1) | 150 g n-Butyl-acrylat | 0,9 g AIBN | – | $80^\circ C/4,5$ h | Lösung |
| 5 | 380 g Pentaerythrit-mono-distearat (1 : 1) | 133,2 g Methyl-methacrylat 88,8 g Styrol | 2,95 g AIBN | 20 g | $80^\circ C/7$ h | Suspension |

Patentanmeldung D 6132 EP

11

HENKEL KGaA ZR-FE/Patente

0035729

Patentanmeldung D 6132 EP 12

HENKEL KGaA
ZR-FE/Patente

0035729

Fortsetzung Tabelle

| Bei-spiel | Medium | Monomeres | Initiator | Emulgator | Temperatur/Zeit | Produkt |
|---|---|---|---|---|---|---|
| 6 | 195 g Stearinsäureester v. Fettalkohol ($C_{8-18}$) | 28,5 g Methylmethacrylat 19 g Butylmethacrylat 47,5 g Styrol | 0,83 g AIBN | 10 g | 75°C/5 h | Dispersion |
| 7 | 190 g Phthalsäurediester von Fettalkohol ($C_{16/18}$) | 85 g Methylmethacrylat 15 g Ethylacrylat | 0,42 g AIBN | 10 g | 75°C/3,5 h | Dispersion |
| 8 | 300 g Stearinsäureester v. Fettalkohol ($C_{8-18}$) | 142,5 Methylmethacrylat 7,5 g Ethylhexylacrylat | 0,6 g AIBN | - | 80°C/5 h | Dispersion |
| 9 | 300 g Hexadecylalkohol | 150 g n-Butylacrylat | 1,66 g DA | - | 95°C/2,5 h | Lösung |
| 10 | 133 g Stearinsäureamid | 180 g 2-Ethylhexylacrylat 20 g Ethylacrylat | 4,0 g DA | - | 105°C/3,5 h | Lösung |

## Anwendung der Produkte

Die nach den vorstehenden Beispielen hergestellten Produkte waren gute Schmier- beziehungsweise Trennmittel. Das Produkt nach Beispiel 6 und 8 war als sogenannter "flow-promoter" verwendbar, das heißt es vermittelte eine innere Gleitung bei der Verarbeitung von PVC und verkürzte somit die Plastifizierzeit.

Das Produkt gemäß Beispiel 4 wurde genauer auf seine Trenn- und Schmierwirkung untersucht. Die Versuche wurden ausgeführt auf einem Laborwalzwerk der Firma Berstorff bei einer Walzenabmessung von 450 x 220 mm.
a) Folgender Grundansatz wurde hergestellt:
    100 Gewichtsteile Suspensions-PVC (K-Wert 58)
    1,5 Gewichtsteile Dioctyl-zinn-thioglykolat
    0,2 Gewichtsteile Calciumstearat
    3,0 Gewichtsteile Gleitmittel.

Zum Vergleich wurde als Gleitmittel verwendet, eine Mischung aus 2 Gewichtsteilen Pentaerythrit-mono/distearat und 1 Gewichtsteil Polyacrylatharz (handelsübliches Copolymerisat aus Methylmethacrylat und Ethylacrylat).

In einem zweiten Ansatz wurden 3 Gewichtsteile des Produktes nach Beispiel 4 eingesetzt.

Auf dem Walzwerk wurden Felle hergestellt und die Zeit bis zum Ankleben an der Walze bestimmt. Bei der Verwendung der Vergleichsmischung betrug die Zeit der Klebfreiheit 1 Minute, bei dem erfindungsgemäßen eingesetzten Produkt gemäß Beispiel 4 38 Minuten. Dann mußte der Versuch abgebrochen werden, da die Thermostabilität des Walzfells beendet war. Die Versuche wurden bei einer Walztemperatur von $200^{\circ}$ C vorgenommen.

b) Es wurde ein Grundansatz hergestellt:

    100    Gewichtsteile Suspensions-PVC (K-Wert 60)

     10    Gewichtsteile Mischpolymerisat aus Methylmeth-
                 acrylat, Butadien und Styrol

    (handelsüblicher Modifier)

    2,5 Gewichtsteile Gleitmittel

Der Versuch wurde bei einer Walzentemperatur von 195° C
vorgenommen.

Die Vergleichsmischung enthielt als Gleitmittel 1 Gewichtsteil Glycerin-mono-oleat, 0,5 Gewichtsteile
Fettsäureester von Octylphenol, 1 Gewichtsteil eines
Copolymerisats aus Methylmethacrylat und Ethylacrylat.
Zum Vergleich wurde in einem zweiten Versuch das Produkt
gemäß Beispiel 4 in gleicher Menge eingesetzt. Dabei
wurde der Druck im Walzenspalt bei verschiedenen Drehzahlen gemessen und folgende Resultate erhalten:

| | |
|---|---|
| Bei 20 Upm Vergleichsmischung: | 4,79 t |
| Produkt Beispiel 4: | 4,62 t |
| Bei 30 Upm Vergleichsprodukt: | 4,92 t |
| Produkt Beispiel 4: | 4,80 t |
| Bei 40 Upm Vergleichsprodukt: | 5,00 t |
| Produkt Beispiel 4: | 4,93 t |

c) Mit dem Produkt nach Beispiel 7 wurde folgender
    Vergleichsversuch durchgeführt:

    Der Grundansatz bestand aus

    100    Gewichtsteilen Suspensions-PVC (K-Wert 58)

      2    Gewichtsteilen dreibasisches Bleisulfat

    0,3 Gewichtsteilen Calciumstearat

      3    Gewichtsteilen Gleitmittel.

Auf einem Plasticorder der Firma Brabender wurde
die Mischung bei 165° C und 30 Upm untersucht.
Dabei wurden im Vergleich als Gleitmittel eingesetzt
2 Gewichtsteile Phthalsäure-di-ester eines $C_{16/18}$-Fettalkohols und 1 Gewichtsteil eines handelsüblichen Copolymerisats aus Methylmethacrylat und Ethylacrylat.

Demgegenüber wurden dann 3 Gewichsteile des nach Beispiel
7 hergestellten Produktes verwendet.
Es zeigte sich, daß mit diesem Produkt die eingesetzte
Probe wunschgemäß nicht plastifizierte, da die Gleitwirkung sehr hoch war.

Unter den gleichen Bedingungen war die Vergleichsprobe
nach 2,7 Minuten plastifiziert.

## Patentansprüche

1. Verfahren zur radikalischen Polymerisation ungesättigter Monomerer unter Verwendung inerter Verdünnungsmittel, dadurch gekennzeichnet, daß die Polymerisation in der Schmelze von bei Raumtemperatur festen organischen Verbindungen durchgeführt wird.

2. Verfahren nach Anspruch 1, dadurch gekennzeichnet, daß die Polymerisation in bei Raumtemperatur festen Fettsäuren beziehungsweise deren Derivaten mit Tropfpunkten zwischen 25 und 120° C, insbesondere zwischen 40 und 110° C vorgenommen wird.

3. Verfahren nach den Ansprüchen 1 bis 2, dadurch gekennzeichnet, daß die Polymerisation in der Schmelze von bei Raumtemperatur festen Fettsäuren mit bis zu 30 C-Atomen und/oder deren Derivaten wie Ester, Amide und/oder Fettalkoholen durchgeführt wird.

4. Verfahren nach den Ansprüchen 1 bis 3, dadurch gekennzeichnet, daß die Polymerisation in gesättigten oder ungesättigten, geradkettigen oder verzweigten Fettsäuren mit 8 bis 26 Kohlenstoffatomen im Molekül und/oder sich davon ableitenden Estern und/oder Partialestern mit mono- bis hexafunktionellen aliphatischen beziehungsweise cycloaliphatischen Alkoholen und/oder Fettsäureamiden, wobei der Stickstoff auch mit 1 bis 2 Alkylresten mit bis zu insgesamt 16 Kohlenstoffatomen substituiert sein kann, vorgenommen wird.

**0035729**
HENKEL KGaA
ZR-FE/Patente

5. Verfahren nach den Ansprüchen 1 bis 3, dadurch gekennzeichnet, daß die Polymerisation in aliphatischen natürlichen oder synthetischen, gegebenenfalls Doppelbindungen enthaltenden Monoalkoholen mit 8 bis 26, insbesondere 8 bis 18 Kohlenstoffatomen im Molekül beziehungsweise deren Ester mit Mono- und Dicarbonsäuren vorgenommen wird.

6. Verfahren nach den Ansprüchen 1 bis 5, dadurch gekennzeichnet, daß die Polymerisation an Monomeren vom Typ der Meth(acrylsäure) beziehungsweise deren Estern oder des Acrylnitrils oder der Meth(acrylamide) oder des Styrols vorgenommen wird.

7. Verfahren nach den Ansprüchen 1 bis 6, dadurch gekennzeichnet, daß das Gewichtsverhältnis von Monomerem zu bei Raumtemperatur festen organischen Verbindungen zwischen 10 zu 90 und 90 zu 10, insbesondere 25 zu 75 und 75 zu 25 liegt.

8. Kunststoffadditive, hergestellt nach den Ansprüchen 1 bis 7, zur Verarbeitung von elastomeren, thermoplastischen Polymerisaten und Duroplasten durch Warmverformung.

9. Kunststoffadditive nach den Ansprüchen 1 bis 7 zur Verarbeitung von Polymeren wie Polyvinylchlorid, Mischpolymerisaten des Vinylchlorids, Polyethylen, Polypropylen, Polymethacrylaten, Polyurethanen, Polyamiden und Polyestern.